Europäisches Patentamt

European Patent Office

Office européen des brevets

(11) Publication number: 0 366 170
A1

# EUROPEAN PATENT APPLICATION

(21) Application number: 89202481.1

(22) Date of filing: 02.09.89

(51) Int. Cl.5: **B65G 21/22 , B29C 67/18 , B29C 39/10 , //B29K75:00, B29L29:00**

(30) Priority: 03.10.88 NL 8802424

(43) Date of publication of application:
02.05.90 Bulletin 90/18

(84) Designated Contracting States:
AT BE CH DE ES FR GB GR IT LI LU NL SE

(71) Applicant: M.C.C. Nederland B.V.
Wattstraat 3
NL-2691 GZ 's-Gravenzande(NL)

(72) Inventor: van Zijderveld, George Johannes
Merellaan 1
NL-2691 CN 's-Gravenzande(NL)

(74) Representative: Smulders, Theodorus A.H.J.,
Ir. et al
Vereenigde Octrooibureaux Nieuwe Parklaan
107
NL-2587 BP 's-Gravenhage(NL)

(54) A method of manufacturing a bend segment for the track of a chain conveyor, and a bend segment for the track of a chain conveyor.

(57) A method of manufacturing a bend segment for the track of a chain conveyor, said bend segment forming an integral unit and having a substantially U-shaped cross section. A mixture of polyurethane forming components is moulded in a mould, from which mixture a polyurethane is formed in the mould. Permanent magnets may be provided in the legs of the U-shaped bend segment or in the connecting portion for the legs.

EP 0 366 170 A1

# A method of manufacturing a bend segment for the track of a chain conveyor, and a bend segment for the track of a chain conveyor.

This invention relates to a method of manufacturing a bend segment for the track of a chain conveyor, which bend segment forms an integral unit and has a substantially U-shaped cross section. The present invention also relates to a bend segment of this type in which permanent magnets are possibly provided in the legs of the U-shaped bend segment or in the connecting portion for the legs of the U-shaped bend segment.

A bend segment of this type is known from European patent 0159074, wherein magnets are provided in the legs of the U-shaped bend segment and from the published European patent application 0286173, wherein magnets are fitted in the connecting portion for the legs of the U-shaped bend segment. With such bend segments, the magnets serve for keeping the carrying surfaces of the chain links containing a ferromagnetic material or made entirely from ferromagnetic material in the bend segments forming part of the track of a chain conveyor, flat on the track. Without the downward force exerted by the magnets, the chain links, due to the tractive force exerted on the chain, have the tendency to rise in the outside bend or even to jump out of the bend, so that the articles transported on the chain may fall off the chain, which is naturally undesirable. In the case of bend segments without magnets, the chain links are provided with tabs or inclined faces, so called bevels, adapted to coact with correspondingly formed provisions in the internal surfaces of the legs of the bend segment.

The known bend segments are made from ultrahigh molecular weight polyethylene, so called UHMWPE. This material is compressed under high pressure to form plates, from which plates the bend segments can then be formed by milling. This manufacturing method has a number of drawbacks. In the first place, there is a substantial loss of material to over 50%, due to the milling process, which renders the bend expensive, and in the second place, the moulded polyethylene, even when it is caused to rest for quite some time after the moulding, is not entirely free from material stresses. Also after the milling of a bend segment from a polyethylene plate, it appears that such a segment is not entirely free from stresses, which is undesirable. Finally, the installation of the magnets in the known bend segments is labour-intensive, while special provisions have to be made to keep the magnets in the bend segments in place.

It is an object of the present invention to provide a method of manufacturing a bend segment in a very simple and inexpensive manner without the occurance of an appreciable loss of material, and wherein the bend segment obtained with this method is free from stresses. In the case of a bend segment with magnets, it is an object of the present invention to also provide a bend segment wherein the magnets can be kept in place in a simple manner. It is another object of the invention to provide a bend segment having at least the same wear resistance and the same good running properties for the chain as the known polyethylene bend segments.

To that effect according to the present invention, a mixture of polyurethane forming components is moulded in a mould, from which mixture a substantially solid polyurethane is formed in the mould. In the case of a bend segment with magnets, prior to moulding, the permanent magnets are then placed in predetermined places in the mould in such a manner that they are surrounded or potted, after the moulding, at least substantially by the polyurethane.

According to a further preferred embodiment of the present invention, the mixture of polyurethane forming components contains at least one polyisocyanate and at least one polyol and, if desired, a polyurethane catalyst.

In spite of the fact that experts were hitherto of the opinion that polyurethane, for application in bend segments, can never approximate the wear resistance of polyethylene, it has surprisingly been found that this is nevertheless possible and extensive experiments have demonstrated that the wear resistance of the bend segments manufactured with the method according to the present invention at least equals that of polyethylene bend segments.

It is observed that Swiss patent 359,057 discloses a metallic guide rail destined for sliding doors or conveyors, which guide rail comprises an upperpart that is made from polyester isocyanate. Moreover, US patent 3,809,442 describes a guide rail for a track chain of a snowmobile, which rails are provided with a synthetic plastics guard at the side resting against the track chain. As synthetic plastics for the guard to be used are mentioned polyurethane, isocyanate, polyol and other chemical components, alone or in combination. These two patents, however, only teach one skilled in the art that the synthetic plastics used for the magnetic bend according to the present invention have good sliding properties and further that a relatively thin strip of such a synthetic plasticsmaterial can be applied advantageously on a metal carrier to thereby obtain less friction than when the metal carrier should function directly as a rail or as a guide. However, the present invention is based on the novel and surprising insight that a known per se synthetic plasticsmaterial allows to manufacturer a complete and strong bend segment with rails, without requiring any metal carrier or support, for this bend segment.

Because according to the present invention, the polyurethane forming components, such as polyol and isocyanate, are poured out freely into the mould and there is no question of injection moulding, use can be made of a simple and hence inexpensive mould. The magnets, if any, are preferably placed on small support elements in the mould so that the polyurethane substantially entirely surrounds or pots the magnets after the moulding. In this manner, the post-assembly of the magnets is superfluous and no special retaining elements for the magnets are required either. It will be clear that the loss of material can be minimal, while it is likewise advantageous that the polyurethane has cured after about 5 minutes, so that the production rate can be high.

As components of the polyurethane forming mixture conventional components are used in the art of manufacturing polyurethane mouldings.

The mixture contains at any rate at least one polyisocyanate, preferably an aromatic polyisocyanate, that can be used as such, or in the form of a prepolymer, an adduct, a trimerization product or a combination thereof. Also, a mixture of two or more polyisocyanates can be employed. Suitable polyisocyanates are known to the worker skilled in the art and include among other things MDI, TDI, NDI and reaction products thereof.

The polyols to be used in the mixture are the polyols conventional for the purpose, such as polyether polyols, polyester polyols and the like. The polyether polyols are in general difunctional alkoxide addition products. Suitable alkoxides are ethylene, propylene and butylene oxide. Also, mixtures thereof can be employed, as well as block copolyethers. These polyether polyols in general have molecular weights as of 400, while the upper limit is determined by the desired product properties. In general, the upper limit for the molecular weight is about 15,000.

Polyester polyols are mostly bivalent or trivalent, and are obtained by polycondensation of dicarboxylic acids or anhydrides thereof with diols and/or triols.

If desired, also a catalyst system can be incorporated in the mixture, so as to control the polyurethane forming reaction. Suitable catalysts are known to the worker skilled in the art.

In this connection, it is observed that it is likewise possible to include a diamine in the system, although, strictly speaking, this forms no polyurethane but a polyurea compound with the polyisocyanate.

Other suitable additives can also be added, such as colorants, UV stabilizers and the like.

A brief summary of the components to be employed is given in ULLMANNS Encyclopädie der technische Chemie, 4th edition, volume 19, pages 301-341.

Further advantages of the bend segments manufactured with the method according to the present invention are that the polyurethane can be easily glued, that during the moulding, screwed bushes can be incorporated in the bend segment, which serve for the assembly of the bend segment in the track, and that also the lower part for the return section of the conveyor chain, which lower part is disposed at the underside of the bend segment, is moulded together with the upper part, although it remains also possible of course to manufacture these parts separately. When the lower part is moulded together with the upper part, this has the additional advantage that also run-in and run-out pieces, if any, for the chain can be moulded as an integral unit with the lower part, which is not possible with the known bend segments, so that these separately milled run-in and run-out pieces have always to be coupled subsequently in the track with the lower part.

The present invention also relates to a bend segment for the track of a chain conveyor, which bend segment forms an integral unit and has a substantially U-shaped cross section, permanent magnets being provided possibly in the legs of the U-shaped bend segment or in the connecting portion for the legs of the U-shaped bend segment, with the bend segment being manufactured from polyurethane. It has been found highly favourable to diverge in such a bend segment the opposite insides of the U-shaped legs, as viewed from the underside of the U. As a result, the screeching sounds occurring in the existing bends appear to diminish substantially.

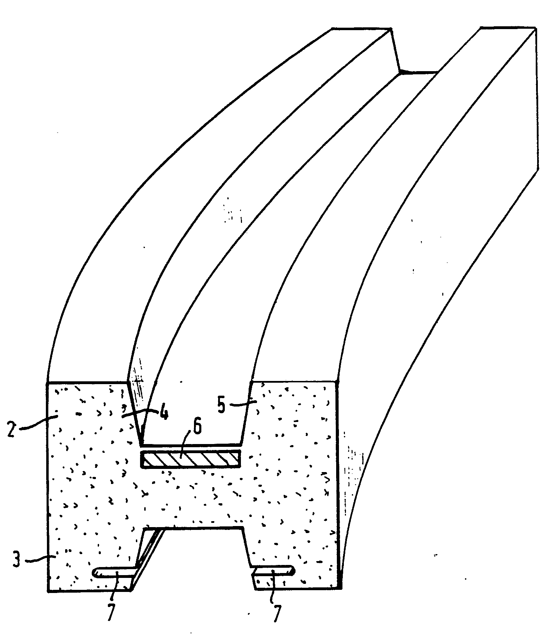

One embodiment of the present invention will now be described, by way of example, with reference to the accompanying drawing, wherein the figure is a perspective cross-sectional view of a bend segment according to the present invention, forming an integral unit with the lower part. The bend segment 1 comprises an upper part 2 for the forward section of the conveyor chain, not shown, and a lower part 3 for the return section of the chain. The upper part is substantially U-shaped and includes two legs 4, 5 on whose upper faces the bearing surface of the chain comes to rest. Provided between legs 4, 5 are permanent magnets, such as 6. By placing these magnets in the mould on pins, they are substantially entirely surrounded or potted by the polyurethane in the ready bend segment. Preferably, the inner faces of the legs of the U-shaped upperpart diverge slightly upwardly as viewed in the figure. It has been found that as a result, the chain produces less screeching sounds during its running, while this likewise facilitates the release from the mould. If the bend segment contains no magnets, the inner faces of the legs of the U-shaped upper part can converge, for guiding so-called bevel chains or slots can be milled in these legs for guiding so-called tab chains.

The lower part 3 is likewise substantially U-shaped, while the legs of the U, after moulding and curing of the polyurethane, contain milled guide slots 7 for the bearing surfaces of the chain links of the return chain section. However, it may also be possible to keep the chain also in the lower part against the track by means of magnets instead of through guide slots 7. The inner faces of the legs of the U-shaped lower part - as viewed in the figure downwardly - preferably also slightly diverge, so as to facilitate the release from the mould.

## EXAMPLE

In the manner according to the present invention, in a ratio of 1:1, a polyol and an isocyanate having the following properties were moulded in a mould at a temperature of 23° :

| Density at 20° C | : polyol | 1026 kgm$^{-3}$ |
|---|---|---|
| | : isocyanate | 1230 kgm$^{-3}$ |
| Viscosity at 20° C | : polyol | 673 mPa.s |
| | : isocyanate | 180 mPa.s |

After curing, the bend segment had the following mechanical properties:

| Density | 1078 kgm$^{-3}$ |
|---|---|
| Bending stress | 108 MPa |
| Tensile strength: | |
| - $\sigma_{max}$ | 55 MPa |
| - elongation at $\sigma_{max}$ | 5 % |
| - $\sigma_{break}$ | 53 MPa |
| - elongation at break | 8 % |
| - E module | 2235 MPa |
| Notched impact strength | 1.6 kJm$^{-2}$ |
| Shore D 3/15 sec | 78/78 |

## Claims

1. A method of manufacturing a bend segment for the track of a chain conveyor, said bend segment forming an integral unit and having a substantially U-shaped cross section, characterized in that a mixture of polyurethane forming components is moulded in a mould, from which mixture a polyurethane is formed in the mould.

2. A method as claimed in claim 1, wherein permanent magnets are provided in the legs of the U-shaped bend segment or in the connecting portion for the legs of the U-shaped bend segment, characterized in that prior to the moulding in the mould, the permanent magnets are placed in predetermined places in such a manner that, after the moulding, they are surrounded or potted substantially by the polyurethane.

3. A method as claimed in claim 1 or 2, characterized in that the mixture of polyurethane forming components contains at least one polyol and at least one isocyanate and, if desired, a polyurethane catalyst.

4 A method as claimed in claim 2 or 3, characterized in that the permanent magnets are placed on metal pins in the mould.

5. A method as claimed in any one of claims 1 - 2, characterized in that together with the U-shaped bend segment, there is moulded a likewise U-shaped lower part.

6. A method as claimed in claim 5, characterized in that together with the bend segment, there is moulded a run-in piece and a run-out piece.

7. A bend segment for the track of a chain conveyor, which bend segment forms an integral unit and has a substantially U-shaped cross section, characterized in that the bend segment is manufactured from polyurethane.

8. A bend segment for the track of a chain conveyor, which bend segment forms an integral unit and has a subtantially U-shaped cross section, while permanent magnets are provided in the legs of the U-shaped bend segment or in the connecting portion for the legs of the U-shaped bend segment, characterized in that the bend segment is made from polyurethane.

9. A bend segment as claimed in claim 7 or 8, characterized in that the inner faces of the legs of the U-shaped bend segment, as viewed in the direction of the upper surface of the bend segment, diverge.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CH-A- 359 057 (INVENTO) <br> * Claims; figures * | 1-9 | B 65 G 21/22 <br> B 29 C 67/18 <br> B 29 C 39/10 // <br> B 29 K 75:00 <br> B 29 L 29:00 |
| Y | US-A-3 809 442 (A.H. PETERSON) <br> * Whole document and in particular column 2, lines 53-56 * | 1-9 | |
| D,Y | EP-A-0 159 074 (MCC NEDERLAND) <br> * Whole document * | 1-9 | |
| P,D <br> Y | EP-A-0 286 173 (MCC NEDERLAND)(12-10-1988) <br> * Whole document * & ZA-A-8 802 372 (23-09-1988) | 1-9 | |
| A | FR-A-1 429 312 (POVAL) <br> * Summary; figures * | 2,4 | |
| A | US-A-4 289 722 (G.E. TRANBARGER) <br> * Whole document * | 2,4 | |
| A | US-A-4 008 801 (J.E. REILLY) <br> * Claims 1-9; figures * | 1,3,7 | TECHNICAL FIELDS SEARCHED (Int. Cl.5) <br><br> B 65 G <br> B 29 C |
| A | GB-A-2 176 454 (P.E. DAMKSAER) <br> * Whole document * | 1,7 | |

The present search report has been drawn up for all claims

| Place of search | Date of completion of the search | Examiner |
|---|---|---|
| THE HAGUE | 10-01-1990 | LABEEUW R.C.A. |